# EUROPEAN PATENT APPLICATION

(11) **EP 4 177 866 A1**
(43) Date of publication of application: **10.05.2023**
(21) Application number: 22205353.0
(22) Date of filing: 03.11.2022
(51) Int. Cl.: G08G 5/00, B64D 25/00, B64D 45/04

(54) **INCAPACITATED PILOT DETECTION SYSTEM**

(30) Priority: 05.11.2021 US 202117519837
(71) Applicant: Lockheed Martin Corporation, Bethesda, Maryland 20817 (US)
(72) Inventor: Pankok, Carl John, Philadelphia, 19146 (US); Lepore, Nicholas, Port Jefferson Station, 11776 (US); Marshall, Geoffrey K., Horseheads, 14845 (US)
(74) Representative: Schmitt-Nilson Schraud Waibel Wohlfrom Patentanwälte Partnerschaft mbB

(57) **Abstract**

An aircraft pilot incapacitation detection system includes a controller configured to determine, based on an input received from a flight control computer, a current flight parameter. The controller compares the current flight parameter to a corresponding predetermined flight metric associated with at least one of a predetermined flight plan or a benchmark for a predetermined flight stage. The controller determines, responsive to the comparison, that the aircraft is in an abnormal state and causes a first prompt by a user interface in communication with the controller, the first prompt being associated with a first time threshold. The controller determines whether the first time threshold is satisfied and, if so, subsequently initiates an emergency protocol and causes a second prompt associated with a second time threshold. Upon determining that the second time threshold has been satisfied, the controller carries out the emergency protocol.

## Description

The present disclosure relates generally to the field of aircraft. More specifically, the present disclosure relates to a system for detecting pilot incapacitation for a reduced-crew aircraft.

Generally, co-pilots or other crew members check on a pilot's status during flight to ensure the pilot is in suitable condition to continue in flight. For example, a pilot might become incapacitated or the pilot's capabilities may be otherwise impaired due to exhaustion. In reduced-crew aircraft, pilots are typically flying without co-pilots or other crew members who might conduct such checks.

Existing systems for monitoring pilots in reduced-crew flights are expensive, inaccurate, and difficult to install and implement. Accordingly, it would be advantageous to provide a system for monitoring pilots in reduced-crew flights that is cost-effective, efficient, and readily compatible with a variety of aircraft systems.

One aspect of the present disclosure relates to a pilot incapacitation detection system for an aircraft. The system includes a controller having a processor and memory containing instructions which, when executed by the processor, cause the controller to carry out the operations of determining, based on an input received from a flight control computer, a current flight parameter. The controller further compares the current flight parameter to a corresponding predetermined flight metric associated with at least one of a predetermined flight plan or a benchmark for a predetermined flight stage. The controller then determines, responsive to the comparison, that the aircraft is in an abnormal state and causes a first prompt by a user interface in communication with the controller, the first prompt being associated with a first time threshold. The controller determines that the first time threshold has been satisfied and, responsive to determining that the first time threshold has been satisfied, initiates an emergency protocol and causes a second prompt by the user interface, the second prompt being associated with a second time threshold. The controller also determines that the second time threshold has been satisfied and, responsive to determining that the second time threshold has been satisfied, proceeds to carry out the emergency protocol.

In various embodiments, determining that the aircraft is in an abnormal state includes determining that the current flight parameter is outside a threshold deviation from the corresponding predetermined flight metric. In some embodiments, at least one of the first time threshold or the second time threshold is based on a level of severity associated with the abnormal state. In other embodiments, the level of severity is based on an amount of deviation of the current flight parameter relative to the corresponding predetermined flight metric. In yet other embodiments, at least one of the first time threshold or the second time threshold is set by the controller based on a current flight stage of the aircraft. In various embodiments, at least one of the first time threshold or the second time threshold is decreased when the aircraft is in at least one of a takeoff flight stage or a landing flight stage as compared to when the aircraft is in a cruising flight stage.

Another aspect of the present disclosure relates to a pilot incapacitation detection system for an aircraft. The system includes a controller configured to receive an input from a flight control computer, evaluate based on the input whether at least one of an inactivity milestone or a flight milestone has been achieved, and responsive to the evaluation, determine whether the aircraft is in an abnormal state. The system further includes a display having a user interface, the controller being configured to cause the user interface to generate a first prompt by a user interface in communication with the controller, where the first prompt being associated with a first time threshold. The controller is further configured to determine whether the first time threshold has been satisfied, and, responsive to determining that the first time threshold has been satisfied, initiate an emergency protocol and cause a second prompt by the user interface, the second prompt being associated with a second time threshold. The controller is further configured to determine whether the second time threshold has been satisfied, and, responsive to determining that the second time threshold has been satisfied, carry out the emergency protocol.

In various embodiments, determining that the inactivity milestone has been missed includes determining an interval of time between at least two consecutive interactions with at least one of the user interface or a pilot control system in communication with the controller, and comparing the interval to a set inactivity time. In some embodiments, the inactivity timer is set based on a severity of the abnormal state. In other embodiments, the inactivity timer is set based on a flight stage of the aircraft. In yet other embodiments, determining that the flight milestone has been missed includes determining a current flight parameter during a current flight stage. In various embodiments, the controller also compares the current flight parameter to a stored benchmark metric associated with a predetermined flight stage. In some embodiments, the controller compares the current flight parameter to a predetermined flight metric associated with a flight plan.

Yet another aspect of the current disclosure relates to a method of determining incapacitation of a pilot of an aircraft. The method includes determining, by a controller in communication with a flight control computer, a parameter associated with a current flight. The method further includes determining, by the controller, that the aircraft is in an abnormal state based on a comparison between the parameter associated with the current flight and a predetermined flight metric. The method includes determining that at least one of an inactivity milestone or a flight milestone has been missed, causing, by the controller, a first prompt on a user interface in communication with the controller. The method further includes determining that the first prompt has not been acknowledged and responsive to determining that the first prompt has not been acknowledged, determining that the pilot is incapacitated and causing a second prompt on the user interface. The method also includes determining that the second prompt has not been acknowledged and based on determining that the second prompt has not been acknowledged, carry out an emergency protocol.

In various embodiments, the first prompt includes an indication of one or more flight-related parameters. In some embodiments, the second prompt includes an indication that the emergency protocol will be initiated. In other embodiments, the emergency protocol includes initiating an emergency landing. In yet other embodiments, the aircraft is single-pilot operated. In various embodiments, determining that the first prompt has not been acknowledged includes determining whether an input has been received by the user interface within a first time threshold. In some embodiments, determining that the second prompt has not been acknowledged includes determining whether an input has been received by the user interface within a second time threshold, the second time threshold being smaller than the first time threshold.

This summary is illustrative only and should not be regarded as limiting.

The disclosure will become more fully understood from the following detailed description, taken in conjunction with the accompanying figures, wherein like reference numerals refer to like elements, in which:
FIG. 1 is a schematic representation of a reduced-crew aircraft, according to an exemplary embodiment.
FIG. 2 is another schematic representation of the reduced-crew aircraft of FIG. 1, according to an exemplary embodiment.
FIG. 3 is a flow diagram of a method carried out by the aircraft of FIG. 1, according to an exemplary embodiment.
FIG. 4 is a schematic representation of a display on a graphical user interface within the aircraft of FIG. 1, according to an exemplary embodiment.
FIG. 5 is a schematic representation of another display on the graphical user interface within the aircraft of FIG. 1, according to an exemplary embodiment.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are contemplated and made part of this disclosure.

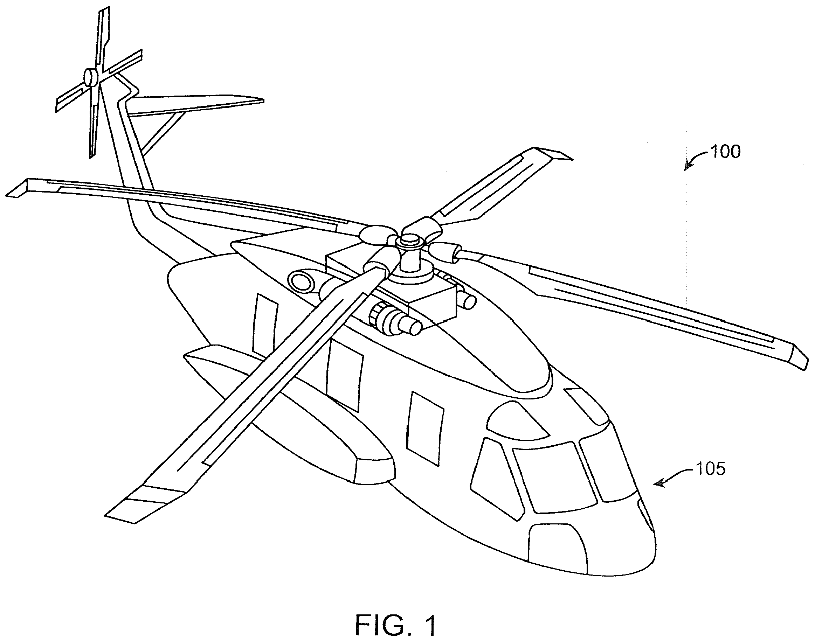

Referring to FIG. 1, a schematic representation of an aircraft 100 is shown, according to an exemplary embodiment. In various embodiments, the aircraft 100 may be a rotary-wing aircraft. In other embodiments, the aircraft 100 may be a fixed-wing aircraft. In some embodiments, the aircraft 100 may be a single-pilot operated aircraft (SPO), an optionally piloted vehicle (OPV) or other reduced-crew aircraft, such that a minimal number of crew members may be present. In addition to one or more actuation systems to facilitate flight, the aircraft 100 includes a cockpit 105, within which the crew of the aircraft 100 is located during flight. In various embodiments, the aircraft 100 is in communication with one or more remote users and/or systems (e.g., via radio communication). The remote users and/or systems may facilitate takeoff and landing of the aircraft 100. For example, the remote users and/or systems may include air traffic control (ATC), where communication between ATC and the aircraft 100 (including compliance with ATC directives) is facilitated by voice communication. In various implementations, a pilot of the aircraft 100 may be required to monitor one or more communication systems included within the aircraft 100 so that the pilot of the aircraft 100 may respond to communications (e.g., instructions) received from the ATC. For example, the pilot may respond to spoken instructions (e.g., navigation guidance) received from the ATC by providing an audible (e.g., via oral communication) to confirm receipt of the instructions and adjusting the aircraft 100 based on the instructions.

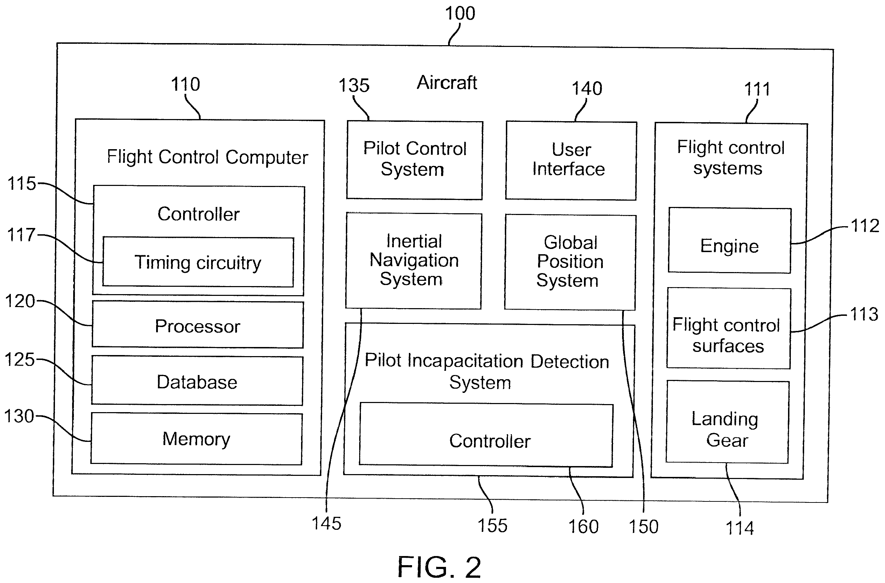

As shown in FIG. 2, the aircraft 100 also includes a flight control computer 110, which includes at least one controller 115 communicably coupled to a processor 120, a database 125, and a memory 130. The flight control computer 110 is configured to facilitate operation of the aircraft 100 by enabling translation of one or more received inputs (i.e., via the controller 115) to controlled actuation of flight control systems 111 within the aircraft 100.

In various embodiments, the controller 115 may include a processor and a non-transitory computer readable medium (e.g., a memory device) having computer-readable instructions stored thereon that, when executed by the processor, cause the at least one controller 115 to carry out operations called for by the instructions. In various embodiments, the at least one controller 115 may be a computing device. In other embodiments, the at least one controller 115 may be configured as part of a data cloud computing system configured to receive commands from a user control device and/or remote computing device. As shown, the flight control systems 111 include, but is not limited to, an engine 112 (e.g., turbojet, turboprop, turbofan, reciprocating, turbine engine, etc.), flight control surfaces 113 (e.g., rotor blades, spars, trailing edge flaps, leading edge slats, rudder, elevators, spoilers, ailerons, winglets, etc.), and landing gear 114.

As shown, the aircraft 100 also includes a pilot control system 135 communicably coupled to the flight control computer 110, where the flight control computer 110 may be configured to receive one or more inputs from the pilot control system 135. The pilot control system 135 may include one or more of a collective pitch control, a throttle control, an anti-torque control, a cyclic pitch control, or any other controls usable by a pilot to control operation of the aircraft 100. The aircraft also includes a user interface 140, which is communicably coupled to both the flight control computer 110 and the pilot control system 135. The user interface 140 may include a graphical user interface (GUI). In various embodiments, the user interface 140 may be disposed within a portable computing device (e.g., a tablet). In various embodiments, the user interface 140 may be included within the pilot control system 135 such that the pilot of the aircraft 100 may use the user interface 140 to control the aircraft 100.

In at least one embodiment, the flight control computer 110 is in communication with an inertial navigation system 145 and a global position system 150, where the systems 145, 150 are configured to determine spatial and inertial positioning of the aircraft 100 relative to a ground surface. In various embodiments, each of the systems 145, 150 include one or more sensors configured to measure at least one of a spatial or inertial position of the aircraft. In various embodiments, the one or more sensors may be communicatively coupled to or included within the flight control computer 110 contained within the aircraft 100. During operation of the aircraft 100, the controller 115 within the flight control computer 110 may receive one or more inputs from at least one of the inertial navigation system 145 or the global position system 150 and, in response, cause the user interface 140 to display an output associated with a current status of the aircraft (e.g., a position, an orientation, a speed, etc.). The output displayed on the user interface 140 may then be used and considered by the pilot of the aircraft 100 to determine which, if any, of the controls of the pilot control system 135 need to be adjusted to maintain a desired or predetermined flight plan.

Finally, the aircraft 100 also includes a pilot monitor serving as a pilot incapacitation detection system 155, which may be communicably coupled to the flight control computer 110 and the user interface 140. In various embodiments, the pilot incapacitation detection system 155 is further in communication with at least one of the inertial navigation system 145, the global position system 150, and the flight control systems 111. The pilot incapacitation detection system 155 is configured to determine whether the pilot of the aircraft 100 is incapacitated based on one or more incapacitation measures. Although a pilot of the aircraft is intended as the primary subject to be evaluated by the pilot incapacitation detection system 155, in some embodiments, another occupant of the cockpit 105 (e.g., a co-pilot) may additionally or alternatively be evaluated by the pilot incapacitation detection system 155.

As shown, the system 155 may include at least one controller 160. In various embodiments, the system 155 may be included within the flight control computer 110. The controller 160 may be a non-transitory computer readable medium or processor, having computer-readable instructions stored thereon that, when executed, cause the at least one controller 160 to carry out operations called for by the instructions. In various embodiments, the at least one controller 160 may be a computing device. In other embodiments, the at least one controller 160 may be configured as part of a data cloud computing system configured to receive commands from a user control device and/or remote computing device.

During operation of the aircraft 100, the pilot incapacitation detection system 155, via the controller 160, may be configured to determine if the pilot of the aircraft is incapacitated based on at least one of an aircraft state (e.g., progress or position in flight plan) or an activity indicator associated with the pilot. To determine the aircraft state, the controller 160 of the pilot incapacitation detection system 155 may query or otherwise determine from the flight control computer 110 one or more flight-related parameters associated with the aircraft 100. Such parameters may include at least one of a fuel level, distance to a destination, a spatial or inertial position, a speed, an altitude, a wind direction associated with the aircraft 100. In other embodiments, the controller 160 may be configured to determine a position, altitude, or speed from at least one of the inertial navigation system 145 or the global position system 150.

In yet other embodiments, the controller 160 may be communicably coupled with one or more sensors included within the aircraft 100, which may be configured to detect one or more flight-related parameters associated with the aircraft (e.g., fuel level, distance to destination, position, speed, altitude, etc.). Upon receiving or otherwise determining the flight-related parameters, the controller 160 may determine the state of the aircraft 100. In some embodiments, the controller 160 may determine that the aircraft 100 is in a normal state or an abnormal state based on the flight-related parameters. In various embodiments, the controller 160 may determine whether the aircraft 100 is in a normal or abnormal state by comparing the determined flight-related parameters to a known predetermined flight plan, such as by comparing a current determined speed to a predetermined planned speed and/or comparing a current determined altitude to a predetermined planned altitude. In yet other embodiments, the controller 160 may determine that the aircraft is in an abnormal state based on a determination of one or more system failures, such as in response to determining that an ice detection sensor detects icing.

Accordingly, the controller 160 may determine that the aircraft 100 is in a normal state if the flight-related parameters are within a predetermined range (e.g., error range) relative to the predetermined flight plan. For example, the controller 160 may determine that the aircraft is in a normal state if the altitude, speed, and wind direction (relative to the aircraft 100) are within a predetermined percentage of the corresponding parameters of the predetermined flight plan. In various embodiments, the predetermined range and/or predetermined percentage may be set by the flight control computer 110 and/or the pilot incapacitation detection system 155, input into the flight control computer 110 or the system 155 (e.g., via the user interface 140) by a user (e.g., the pilot or someone other than the pilot), or communicated to the flight control computer 110 or the system 155.

Alternatively, the controller 160 may determine that the aircraft 100 is in an abnormal state if the flight-related parameters are outside a predetermined range (e.g., error range) relative to the predetermined flight plan. For example, the controller 160 may determine that the aircraft is in an abnormal state if at least one of the altitude, speed, or wind direction (relative to the aircraft 100) are more than a predetermined percent error relative to the corresponding parameters of the predetermined flight plan (e.g., 5%, 10%, 15%, etc.). Although the example relates to altitude, speed, and wind direction, any flight-related parameter may be determined by the controller 160 and compared to a corresponding metric of the predetermined flight plan to determine a normal or an abnormal state of the aircraft 100. For example, in some embodiments, the flight-related parameter may be a degree of compliance with an instruction. If the pilot is repeatedly instructed to carry out a command and fails to do so, the controller 160 may determine that the aircraft is an abnormal state. If a latency time between when a command is given and when the pilot responds exceeds a threshold, the controller 160 may determine an abnormal state.

Upon determination of the state of the aircraft 100 (i.e., normal or abnormal), the pilot incapacitation detection system 155 may determine or may predict that a pilot is incapacitated, is likely incapacitated, or may become incapacitated. In some embodiments, the pilot incapacitation detection system 155 may additionally or alternatively make a predictive determination associated with the state of the aircraft 100. For example, the controller 160 may determine that, based on the flight-related parameters or a trend thereof, the aircraft 100 is likely to transition from a normal state to an abnormal state or vice versa. In various embodiments, the controller 160, based on the determination that the aircraft 100 is in a normal or abnormal state, may subsequently determine whether the pilot is incapacitated.

For example, if the controller 160 determines that the aircraft 100 is in the abnormal state or is likely to transition to the abnormal state, the controller 160 may determine that the pilot is incapacitated. In various embodiments, the controller 160 may compare the determined trend in the flight-related parameters to stored data (e.g., within the memory 130). In yet other embodiments, the controller 160 may determine degree or severity of the abnormal state. For example, the controller 160 may determine if the abnormal state falls within a severe, high, or highest abnormality state associated with a first threshold, a second threshold, and a third threshold, respectively. In various embodiments, the degree of severity of the abnormal state may be determined by the controller 160 based on, for example, an amount of deviation determined between the flight-related parameters and corresponding metrics of the predetermined flight plan.

The pilot incapacitation detection system 155, independently of or in conjunction with the aircraft 100 status determination, may also determine an activity indicator of the pilot of the aircraft 100. In various embodiments, the controller 160 is configured to query or otherwise determine from the flight control computer 110 an amount of pilot interaction with the aircraft 100. In other embodiments, the controller 160 may be configured to determine the amount of pilot interaction directly from the pilot control system 135 (e.g., by receiving one or more inputs direction therefrom or from one or more sensors in communication with the systems 135, 155) and/or from the user interface 140. In various embodiments, the controller 160 may determine a frequency of or a pattern in pilot interactions with the aircraft 100, such as by determining an amount of time between pilot use of one or more controls within the pilot control system 135 and/or an amount of time between pilot engagement with the user interface 140. For example, the controller 160 may determine an amount of time between consecutive pilot uses of a throttle control, a pitch control, etc. In other embodiments, the controller 160 may determine a pattern or trend among a series of consecutive pilot uses of one or more controls (e.g., within the system 135 and/or the user interface 140) within the aircraft 100. In yet other embodiments, the controller 160 may determine an amount of time (e.g., duration) of each pilot use of one or more controls within the aircraft 100. For example, the controller 160 may be configured to measure or determine how long a pilot adjusts the throttle control or how long the pilot adjusts the pitch control.

In various embodiments, the controller 160 may be configured to determine that the pilot is incapacitated based on whether interaction decreases or an inactivity milestone is missed. For example, the controller 160 may compare the frequency or pattern in aircraft 100 interactions with a preset interaction threshold. In other embodiments, the controller 160 may analyze the frequency or pattern in interactions and determine whether the pilot interactions fall within an acceptable error range relative to the threshold. For example, if the controller 160 determines that an amount of time between consecutive interactions is greater than a predetermined threshold time (e.g., 5 minutes, 10 minutes, 30 minutes, 1 hour, etc.), the controller 160 may determine that the pilot has missed an inactivity milestone. In other embodiments, the controller 160 may determine that a frequency or pattern in pilot interactions falls outside of an acceptable range of interactive activity and may consequently determine that the pilot has missed an inactivity milestone. Accordingly, the controller 160 may determine that the pilot is incapacitated responsive to determining that the pilot has missed an inactivity milestone. Upon determination that the pilot is incapacitated, the controller 160 may initiate and/or carry out one or more emergency protocols associated with the aircraft 100.

In yet other embodiments, the controller 160 may analyze a pattern of previous pilot interactions and determine that the pilot is likely to miss an inactivity milestone. Similarly, the controller 160 may compare the duration of the pilot interactions to one or more predetermined thresholds or predetermined ranges and determine whether the pilot interactions fall within an acceptable error range relative to the threshold. In various embodiments, the predetermined range and/or threshold may be set by the flight control computer 110 and/or the pilot incapacitation detection system 155, input into the flight control computer 110 or the system 155 (e.g., via the user interface 140) by a user (e.g., the pilot or someone other than the pilot), or communicated to the flight control computer 110 or the system 155.

In other embodiments, the pilot incapacitation detection system 155 may be configured to determine that the pilot is incapacitated based on whether one or more flight milestones are missed. In various embodiments, flight milestones may correspond to one or more flight-related parameters or stages associated with various flight phases including, before takeoff, during takeoff, after takeoff, during climb, during descent, during approach, before landing, during go-around, etc. For example, the pilot incapacitation detection system 155 (via the controller 160) may be configured to determine, such as by querying the flight control computer 110, flight-related parameters during each flight phase and compare each parameter to one or more corresponding benchmarks or predetermined flight metrics (i.e., based on the flight plan). Such predetermined flight metrics may be stored within the flight computer 110 and may include benchmark speeds (i.e., cruise speed), altitudes, climb rates, acceleration, etc. In other embodiments, the flight-related parameters or stages may be associated with a status of one or more flight control systems 111.

For example, during takeoff, the predetermined flight stages may include acceleration to a first velocity, acceleration to a second velocity, etc. After takeoff, the predetermined flight stages may include reaching a passing acceleration altitude and reaching a transition altitude. During climbing, flight stages may include a first altitude, a first climbing speed, a second altitude, a second climbing speed, etc. During cruising, the flight stages may include a first altitude, a first cruising speed and a second altitude and second corresponding cruising speed. Similarly, during descent, flight stages may include one or more benchmark altitudes and associated speeds. Before landing, flight stages may include deceleration, and benchmark velocities at corresponding altitudes. In any of the above embodiments, each of the predetermined flight stages and the benchmark flight metrics associated with the flight stages may define one or more flight milestones. Accordingly, the controller 160, for each flight stage, may be configured to compare current flight-related parameters to one or more stored benchmarks for each of the predetermined flight stages. If the controller 160 determines that a current flight-related parameter deviates from the stored benchmarks by more than a predetermined amount, the controller 160 may subsequently determine that a flight milestone has been missed.. Accordingly, the controller 160 may determine that the pilot is incapacitated responsive to determining that the flight milestone is missed. Upon determination that the pilot is incapacitated, the controller 160 may initiate and/or carry out one or more emergency protocols associated with the aircraft 100.

In various embodiments, the predetermined flight stages and/or corresponding benchmarks may be set by a manufacturer of the aircraft, by support personnel, the pilot, or other authorized users of the aircraft 100. In various embodiments, the predetermined flight stages and/or corresponding benchmarks may be based on a type of the aircraft 100, a distance of the flight, a time of day, various flight guidelines, etc.

In some embodiments, the pilot incapacitation detection system 155 may be configured to engage the pilot in response to a determination that the aircraft 100 is in an abnormal state and/or in response to a determination that an inactivity milestone and/or a flight milestone has been missed. In various embodiments, the controller 160 may be configured to cause the user interface 140 to display a message or query to prompt the pilot to engage with the user interface 140 (and thus the aircraft 100) and/or to correct a flight control. In various embodiments, the controller 160 may be configured to facilitate regular interaction with the user interface 140 to prevent inactivity and/or to ensure flight milestones are met. For example, the controller 160 may cause the user interface 140 to display one or more flight-related parameters (e.g., speed, fuel level, distance to destination, altitude) periodically (e.g., every 5 minutes, 10 minutes, etc.).

The controller 160 may also cause the user interface 140 to provide a prompt (e.g., message, query, etc.) that must be acknowledged through interaction with the user interface 140. In various embodiments, the controller 160 may set a timer (e.g., 1 minute, 2 minutes, 5 minutes, etc.) for response by the pilot after providing the message or query on the user interface 140. For example, the controller 160 may cause the user interface 140 to display a query to the pilot inquiring if the flight is progressing as planned. Accordingly, before the timer expires, the pilot must interact with the user interface 140 or with the pilot control system 135 to acknowledge the query. In another example, the controller may cause the user interface 140 to display one or more flight-related parameters (e.g., a current speed, fuel level, distance to destination, altitude, spatial position, etc.), along with a timed prompt to acknowledge the displayed information. Accordingly, before the timer expires, the user interface 140 must register an interaction from the pilot (e.g. pressing a button, using a touch screen, etc.) to acknowledge the information.

The pilot incapacitation detection system 155 may be configured to initiate one or more emergency operations in the event an inactivity milestone and/or a flight milestone are missed. For example, the system 155 may determine that the inactivity milestone has been missed if a response to a query is not received within a predetermined period of time (e.g., before the timer expires). The period of time ("timer") may be set by the manufacturer of the aircraft 100, a remote crew, the pilot, or another authorized user of the aircraft 100. For example, the pilot incapacitation detection system 155, via the controller 160, may be configured to communicate with at least one of the flight control computer 110 or the flight control systems 111 in response to a determination that the aircraft is in an abnormal state, an inactivity milestone has been missed, a flight milestone has been missed, or a determination that the pilot is incapacitated.

For example, the controller 160 may be configured cause (e.g., via communication with the flight control computer 110 and/or the flight control systems 111) emergency deployment of the landing gear 114 and subsequent emergency landing of the aircraft 100. In other embodiments, the controller 160 may be configured to initiate an alarm system within the aircraft 100 to alert the pilot or other crew members in response to a determination that the aircraft 100 is in an abnormal state, an inactivity milestone has been missed, a flight milestone has been missed, or a determination that the pilot is incapacitated. In yet other embodiments, the controller 160 may be configured to send a notification to one or more remote locations (e.g., command center, another aircraft, emergency personnel at a landing site, etc.) in response to a determination that the aircraft 100 is in an abnormal state, an inactivity milestone has been missed, a flight milestone has been missed, or a determination that the pilot is incapacitated.

In various embodiments, the controller 160 may be configured to provide a second prompt or warning via the user interface 140 prior to, concurrently with, or after initiating any emergency procedures. In some embodiments, upon determination that the pilot is incapacitated or upon determining that an inactivity or flight milestone is missed, the controller 160 may cause the user interface 140 to provide a prompt requiring acknowledgement (i.e., by the pilot). For example, if the controller 160 determines that an inactivity or a flight milestone has been missed, the controller 160 may determine that the pilot of the aircraft 100 is incapacitated, initiate one or more emergency procedures, and cause the user interface 140 to provide a prompt indicating that emergency procedures will automatically proceed unless a response is received from the pilot within a second response threshold. In various embodiments, the response may be input by pressing a button, using a touch-sensitive region of the user interface 140, providing an oral command, or implementing any other input method known in the art. Such prompts may be provided in connection with information relating to timing circuitry (a timer) 117 of the controller 160. Accordingly, during use, the pilot incapacitation detection system 155 may be configured to cause a first prompt (e.g., an audiovisual prompt) by the user interface 140 after an inactivity timer (or inactivity time threshold) is reached (e.g., 10 minutes) and/or after a flight milestone is missed, set a first response time threshold (e.g., 3 minutes) for responding to the first prompt. The controller 160 may then cause a second prompt by the user interface 140 if the first response time threshold expires without acknowledgement, where the second prompt is accompanied by a second response time threshold (e.g., 2 minutes), and after which the system 155 may carry out emergency procedures if no interaction with the aircraft 100 is detected.

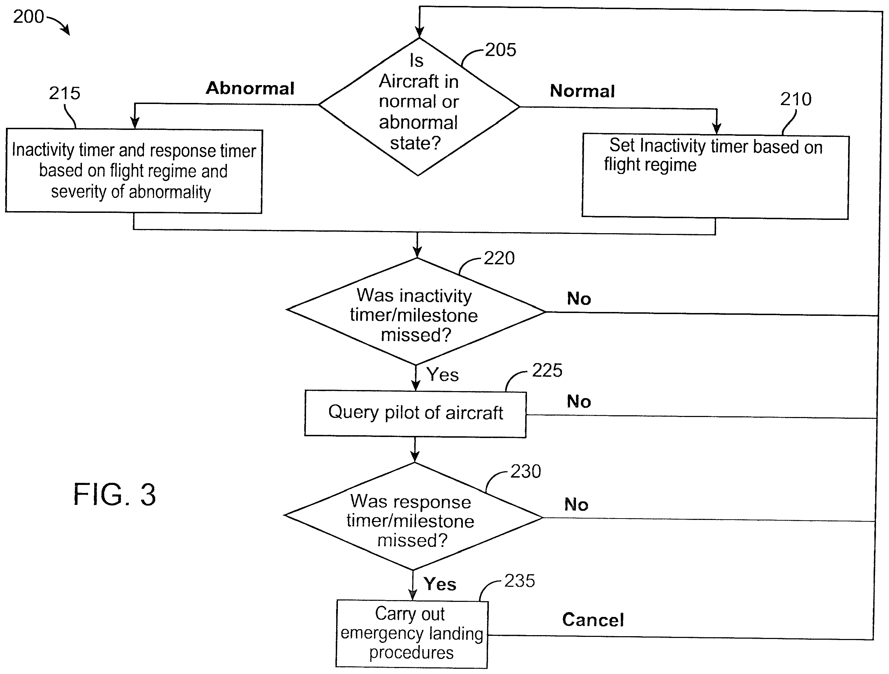

During operation of the aircraft 100, the pilot incapacitation determination system 155 may be configured to carry out an exemplary method 200, which is shown in FIG. 3. During flight, the controller 160 within the pilot incapacitation determination system 155 is configured to carry out an operation 205, in which the controller 160 determines whether the aircraft is in an abnormal or a normal state. As described above, the controller 160 may make the abnormal or normal state determination by comparing one or more flight-related parameters to corresponding parameters from a predetermined flight plan associated with the aircraft 100. The controller 160 may carry out the comparison by communicating with at least one of the flight control computer 110, the user interface 140, or any one or more of the systems 111, 135, 145, 150. If, in operation 205, the controller 160 determines that the aircraft is in a normal state, the controller 160 may set an inactivity timer (e.g., 10 minutes) in an operation 210, which corresponds to an inactivity milestone, where the controller 160 causes a prompt via the user interface 140 when the timer expires if no interactions with the aircraft 100 have occurred within that period. The controller 160 may set the inactivity timer based on at least one of a flight regime (e.g., cruise, landing approach, climbing, descending, etc.) and a severity of an abnormality associated with the aircraft 100.

In various embodiments, the inactivity timer (or inactivity time threshold) may be defined as the maximum time allowed to pass since last interaction with the aircraft 100 systems before the pilot incapacitation determination system 155 causes the user interface 140 to provide a prompt for acknowledgement (i.e., query the aircraft 100 pilot). In various embodiments, the inactivity timer may be set to approximately 10-15 minutes, which is based on research findings associated with greatest risks of instantaneous pilot incapacitation or need for medical attention. For example, pilots incapacitated for upwards of 30 minutes often require medical attention within the hour (*see*, e.g., Evans, Sally, "The Annual Incapacitation Rate of Commercial Pilots," Aviation, Space, and Environmental Medicine, vol. 83, no. 1, Jan. 2012, pp. 42-49; DeJohn, Charles A, "In-Flight Medical Incapacitation and Impairment of U.S. Airline Pilots: 1993 to 1998," Office of Aerospace Medicine, Oct. 2004; Australian Transport Safety Bureau, "Pilot Incapacitation Occurrences 2010 - 2014," 2016). Accordingly, the inactivity timer may be set to a value less than 30 minutes such that in the event that the pilot incapacitation detection system 155 determines the pilot is incapacitated, the system 155 may have more time to facilitate emergency landing, send notifications to relevant emergency personnel, etc.

The controller 160 may simultaneously set a response time threshold (e.g., 3 minutes) corresponding to the prompt, where the pilot must interact with the aircraft 100 (e.g., via the user interface 140) before the response time threshold is reached (i.e., the controller 160 must record an interaction before the time threshold). The controller 160 is then configured to determine whether the inactivity milestone is missed based on whether the pilot interacts with the aircraft 100 before the timer expires and/or whether a response is received by the user interface 140 after the inactivity timer expires and before the first response time threshold is reached. If, in operation 220, the controller 160 determines that neither an inactivity milestone nor a flight milestone are not missed, the controller 160 will restart the method 200 and return to the operation 205.

Alternatively, if the controller 160 determines in the operation 205 that the aircraft 100 is in an abnormal state, the controller 160 may set an inactivity timer and a first response time threshold based on the severity of the determined abnormality. For example, the controller 160 may set the inactivity timer to be greater for a lower severity abnormality and lower (or zero) for the highest severity abnormality. In various embodiments, the controller 160 is configured to set the inactivity timer to 60 seconds for a severely abnormal state, 30 seconds for a highly severe abnormal state, and 0 seconds for the highest severity abnormal state. In some embodiments, the severely abnormal state may correspond to a recommended "land as soon as practical" situation where the landing site and remaining duration of the flight may be at the discretion of the pilot of the aircraft 100. The highly severe abnormal state may correspond to a "land as soon as possible" situation, where the controller 160 may cause the user interface 140 to prompt the pilot to divert the aircraft 100 to a safe landing site. The highest severity abnormal state may correspond to a "land immediately" situation, where the controller 160 may cause the user interface 140 to prompt the pilot to land the aircraft 100 immediately. Alternatively, in the highest severity abnormal state, the controller 160 may simply initiate emergency landing. In various embodiments, the severity of the abnormality may be based on an amount of deviation of one or more flight-related parameters as compared to one or more benchmark metrics for predetermined flight stages or predetermined metrics for a particular flight plan.

After the controller 160 has determined the state of the aircraft 100 in operation 205 and has set an inactivity timer and corresponding first response time in operation 215 (based on a flight regime and/or based on a severity of an abnormality associated with the aircraft 100), the controller 160 is configured to determine if an inactivity milestone or a flight milestone is missed in an operation 220. The inactivity timer may be set on the flight regime so as to have a different time threshold (e.g., about 10 minutes if in cruise, 1 minute if in final approach). To determine whether the inactivity milestone is missed, the controller 160 is configured to determine a span of time between consecutive interactions with one or more systems of the aircraft 100 (e.g., interactions with the user interface 140, the pilot control system 135, the flight control computer 110, etc.) and compare the span of time to the set inactivity timer (e.g., 10 minutes, 15 minutes). If the span of time is greater than the set inactivity timer, the controller 160 determines the inactivity milestone has been missed. In various embodiments, the controller 160 may begin a timed countdown in operation 220, where the controller 160 determines the inactivity milestone has been missed if no interactions with the aircraft 100 are sensed before the timed countdown expires. If the controller 160 determines that the inactivity milestone is not missed, the controller 160 may return to operation 205 and begin the method 200 again.

Similarly, to determine if a flight milestone has been missed, the controller 160 may determine current flight-related parameters (e.g., speed, altitude, acceleration, etc.) and compare the current parameters to stored benchmark metrics associated with the current flight stage or with a predetermined flight plan. Accordingly, the controller 160 may determine that a flight milestone has not been missed if the current flight-related parameters match or are within an acceptable range relative to the stored benchmark metrics. In various embodiments, the acceptable range may be set or determined by the pilot incapacitation detection system 155. Conversely, the controller 160 (within the system 155) determines that a flight milestone has been missed if the current flight-related parameters fall outside the acceptable range relative to the stored benchmark metrics.

In response to a determination that either the inactivity milestone or the flight milestone is missed in operation 220, the controller 160 is configured to cause the user interface 140 to provide a prompt (e.g., visual, auditory, haptic, etc.) to the pilot in an operation 225. As described previously, the prompt may include one or more flight-related parameters, such as a fuel level, a distance to a destination, a speed, an altitude, a pitch, etc. In various embodiments, the prompt may also indicate an amount of deviation of the one or more of the flight-related parameters as compared to corresponding flight plan or stored benchmark metrics. Simultaneous with providing the prompt via the user interface 140, the controller 160 may set a first response time threshold (e.g., 3 minutes) associated with the first prompt. The controller 160 may then await an interaction with the user interface 140 before the first response time threshold is reached. If the controller 160 determines an interaction with the user interface 140 or one or more other aircraft 100 systems before the first time threshold expires, the controller 160 may return to the operation 205 and restart the method 200. Alternatively, if the first time threshold is reached and no interaction is detected or determined by the controller 160, the controller 160 determines that the pilot of the aircraft 100 is incapacitated and may initiate one or more emergency protocols. The controller 160 then advances to an operation 230, where a second prompt is provided by the user interface 140 (as controlled by the controller 160).

In the operation 230, the controller 160 causes the second prompt to be provided by the user interface 140, which may include a notice (e.g., visual, auditory, haptic, etc.) indicating one or more emergency protocols will proceed if the second prompt is not acknowledged before a second response time threshold (e.g., 2 minutes) is reached. As noted above, the emergency protocols may include, but are not limited to, initiation of emergency landing procedures, notification of emergency or support personnel, notification of control towers or systems, initiation of aircraft 100 emergency alarm systems, etc. If, in the operation 230, the controller 160 determines that the second prompt has been acknowledged via the user interface 140 before the second response time threshold expires, the controller 160 may return to operation 205 and restart the method 200. However, if the controller 160 does not detect or otherwise determine interaction with the user interface 140 or other aircraft 100 systems following the second prompt and before the second response time threshold is reached, the controller 160 will proceed to an operation 235 in which the controller 160 will cause initiation of one or more emergency protocols. In various embodiments, the user interface 140 may be used to cancel the emergency protocols after initiation, which may return the controller 160 to operation 205 to restart the method 200.

In various embodiments, the user interface 140 may be or include a visual display (e.g., LCD, LED, OLED, etc.). In various embodiments, the user interface 140 may be touch-sensitive (e.g., via pressure or capacitive touch). In other embodiments, the user interface 140 may include one or more input features including, but not limited to, buttons, levers, switches, knobs, or other features known in the art. Accordingly, in various embodiments, the user interface 140 may output one or more displays throughout the aircraft 100 flight, which may include one or more indications of a current operational status of the aircraft 100, a flight-related parameter (e.g., speed, fuel level, a distance to destination, altitude, pitch, etc.).

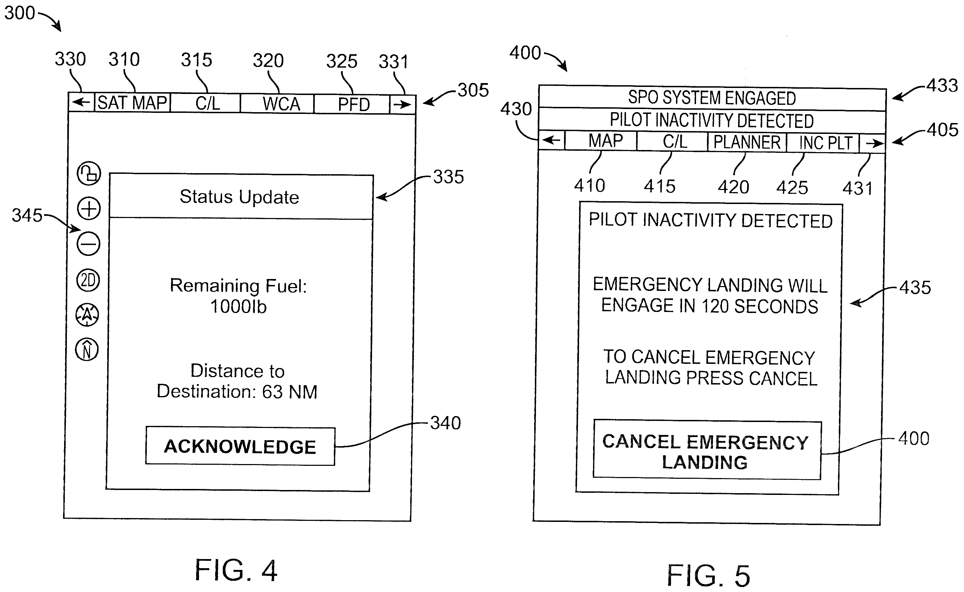

FIG. 4 shows an example display screen 300 provided by the user interface 140, which may be shown in response to the controller 160 carrying out operations 220 and/or 225. As shown, the display screen 300 may include a primary navigation menu 305, which may be disposed along an upper portion of the screen 300. The menu 305 may facilitate navigation to a satellite map ("Sat Map") 310; electronic checklists ("C/L") 315; warnings, cautions, and advisories ("WCA") 320; and/or primary flight display ("PFD"), which may be selected using one or more navigational arrows 330, 331. As shown, the screen 300 may include a prompt 335, which further includes a status update relating to the aircraft. The status update may include one or more flight-related parameters, such as a remaining amount of fuel and/or a distance to a destination (or a distance from a start point). The screen 300 may also include an input region 340, which may be used to acknowledge the status update. Accordingly, if the region 340 is used to input an acknowledgement of the status update provided in the prompt 335, the controller 160 may record or determine an interaction with the aircraft 100 and subsequently determine if an inactivity milestone has been missed or not. In various embodiments, the screen 300 may also include one or more additional flight control menus 345, which may be configured to facilitate aircraft control.

Similarly, as shown in FIG. 5, the controller 160 may cause the user interface 140 to provide a display screen 400 in response to the controller carrying out operations 230 and/or 235. As shown, the display screen 400 may include a navigation menu 405 disposed along an upper portion of the screen 400. The menu 405 may facilitate navigation to a map 410, electronic checklists ("C/L") 410, a flight planner ("Planner") 420, and incapacitated pilot screens ("Inc Pit") 425, which may be selected using one or more navigational arrows 430, 431. As shown, the screen 400 may include one or more notifications 433, which may indicate that the pilot incapacitation detection system 155 is engaged ("SPO SYSTEM ENGAGED") and/or that an inactivity milestone was missed ("PILOT INACTIVITY DETECTED"). The screen 400 may include a prompt 435, which further includes one or more notifications based on the outcomes of operations 230 and 235. Accordingly, the notifications may indicate that pilot inactivity is detected, or that based on a failure to interact with the aircraft 100 systems before the first time threshold is reached, emergency protocols (e.g., emergency landing) will begin when a second time threshold is reached. The prompt 435 may also include an instruction (i.e., to the pilot) to indicate that emergency protocols may be canceled if an input is received. The input may include pressing, touching, or otherwise selecting a region 440 on the screen ("CANCEL EMERGENCY LANDING").

In various embodiments, the pilot inactivity detection system 155 may be configured to operate during one or more (or all) phases of flight (e.g., liftoff, cruising, landing, etc.). In various embodiments, the pilot inactivity detection system 155 may initiate operation and carry out the method 200 responsive to one or more detected aircraft 100 conditions. For example, if the flight control computer 110 (via the controller 115) detects a sudden or abrupt change in one or more of the flight-related parameters, the controller 160 may begin carrying out the method 200. In some embodiments, the controller 160 may start the method 200 by first carrying out operation 205. In other embodiments, the controller 160 may start with any of the operations 210-235.

In various embodiments, at least one of the first time threshold or the second time threshold may be set based on a current flight stage. For example, the controller 160 of the pilot incapacitation detection system 155 may increase at least one of the first time threshold or the second time threshold during takeoff and landing and may decrease the thresholds during cruising. In various embodiments, the pilot incapacitation detection system 155 may also include one or more physiological and/or biometric sensors (e.g., blood pressure, facial recognition, pulse oximeters, retinal scanners, etc.), which may be configured to monitor a pilot of the aircraft 100. For example, the sensed information from the physiological and/or biometric sensors may be received by the controller 160, in addition to or as an alternative to determining that an inactivity time threshold is satisfied (or an inactivity milestone is missed), such that the controller 160 may cause the user interface 140 to query the aircraft pilot in the operation 225 based on the sensed information from the physiological and/or biometric sensors. Accordingly, the system 155 may be further configured to cause the user interface 140 to provide one or more prompts for acknowledgement in response to a determination by the controller 160 that one or more physiological metrics (as determined by the one or more sensors) falls outside an acceptable range.

Notwithstanding the embodiments described above in reference to FIGS. 1-5, various modifications and inclusions to those embodiments are contemplated and considered within the scope of the present disclosure.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration.

In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Two or more steps may be performed concurrently or with partial concurrence, unless specified differently above.

It is important to note that any element disclosed in one embodiment may be incorporated or utilized with any other embodiment disclosed herein. The systems and methods described herein may be embodied in other specific forms without departing from the characteristics thereof. The foregoing implementations are illustrative rather than limiting of the described systems and methods. The scope of the systems and methods described herein is thus indicated by the appended claims, rather than the foregoing description, and changes that come within the meaning and range of equivalency of the claims are embraced therein.

## Claims

1. A pilot incapacitation detection system for an aircraft having a controller comprising a processor and a memory containing instructions which, when executed by the processor, cause the controller to carry out operations comprising:
determining, based on an input received from a flight control computer, a current flight parameter;
comparing the current flight parameter to a corresponding predetermined flight metric associated with at least one of a predetermined flight plan or a benchmark for a predetermined flight stage;
determining, responsive to the comparison, that the aircraft is in an abnormal state;
causing a first prompt by a user interface in communication with the controller, the first prompt being associated with a first time threshold;
determining that the first time threshold has been satisfied;
responsive to determining that the first time threshold has been satisfied, initiating an emergency protocol and causing a second prompt by the user interface, the second prompt being associated with a second time threshold;
determining that the second time threshold has been satisfied; and
responsive to determining that the second time threshold has been satisfied, proceed to carry out the emergency protocol.

2. The system of claim 1, wherein determining that the aircraft is in an abnormal state comprises determining that the current flight parameter is outside a threshold deviation from the corresponding predetermined flight metric.

3. The system of claim 1 or 2, wherein at least one of the first time threshold or the second time threshold is based on a level of severity associated with the abnormal state.

4. The system of claim 3, wherein the level of severity is based on an amount of deviation of the current flight parameter relative to the corresponding predetermined flight metric.

5. The system of one of claims 1-4, wherein at least one of the first time threshold or the second time threshold is set by the controller based on a current flight stage of the aircraft.

6. The system of claim 5, wherein at least one of the first time threshold or the second time threshold is decreased when the aircraft is in at least one of a takeoff flight stage or a landing flight stage as compared to when the aircraft is in a cruising flight stage.

7. The system of one of claims 1-6, wherein the flight parameter corresponds to an inactivity milestone, and wherein comparing the current flight parameter to a corresponding predetermined flight metric comprises:
determining an interval of time between at least two consecutive interactions with at least one of the user interface or a pilot control system in communication with the controller; and
comparing the interval to a set inactivity time.

8. A method of determining incapacitation of a pilot of an aircraft, the method comprising:
determining, by a controller in communication with a flight control computer, a parameter associated with a current flight;
determining, by the controller, that the aircraft is in an abnormal state based on a comparison between the parameter associated with the current flight and a predetermined flight metric;
determining that at least one of an inactivity milestone or a flight milestone has been missed;
causing, by the controller, a first prompt on a user interface in communication with the controller;
determining that the first prompt has not been acknowledged;
responsive to determining that the first prompt has not been acknowledged, determine that a pilot is incapacitated and cause a second prompt on the user interface;
determine that the second prompt has not been acknowledged; and
based on determining that the second prompt has not been acknowledged, carry out an emergency protocol.

9. The method of claim 8, wherein the first prompt comprises an indication of one or more flight-related parameters.

10. The method of claim 8 or 9, wherein the second prompt comprises an indication that the emergency protocol will be initiated.

11. The method of one of claims 8-10, wherein the emergency protocol includes initiating an emergency landing.

12. The method of one of claims 8-11, wherein the aircraft is single-pilot operated.

13. The method of one of claims 8-12, wherein determining that the first prompt has not been acknowledged comprises determining whether an input has been received by the user interface within a first time threshold.

14. The method of claim 13, wherein determining that the second prompt has not been acknowledged comprises determining whether an input has been received by the user interface within a second time threshold, the second time threshold being smaller than the first time threshold.

15. The method of claim 14, wherein at least one of the first time threshold or the second time threshold is based on a level of severity of the abnormal state.
